# EUROPÄISCHE PATENTSCHRIFT

(11) **EP 3 359 358 B1**
(45) Veröffentlichungstag und Bekanntmachung des Hinweises auf die Patenterteilung: **25.09.2019**
(21) Anmeldenummer: 16751519.6
(22) Anmeldetag: 27.07.2016
(51) Int. Cl.: B27D 5/00, B29C 63/00, G05B 19/19

(54) **BEARBEITUNGSMASCHINE UND VERFAHREN ZUR BEARBEITUNG VON WERKSTÜCKEN**
PROCESSING MACHINE AND METHOD FOR PROCESSING WORK PIECES
MACHINE-OUTIL ET PROCÉDÉ D'USINAGE DE PIÈCES

(30) Priorität: 06.10.2015 DE 102015219257
(43) Veröffentlichungstag der Anmeldung: 15.08.2018
(73) Patentinhaber: HOMAG GmbH, 72296 Schopfloch (DE)
(72) Erfinder: KNORR, Wolfgang, 72145 Hirrlingen (DE); FRIEBOLIN, Manuel, 75365 Calw-Stammheim (DE); GRAF, Joachim, 72189 Vöhringen (DE)
(74) Vertreter: Hoffmann Eitle
(86) Internationale Anmeldenummer: PCT/EP2016/067894
(87) Internationale Veröffentlichungsnummer: WO 2017/059980

(56) Entgegenhaltungen:
- EP-A1- 2 308 659
- DE-A1- 19 741 163
- DE-T2-602004 002 794

## Beschreibung

### GEBIET DER ERFINDUNG

Die vorliegende Erfindung betrifft eine Bearbeitungsmaschine gemäß dem Oberbegriff des Anspruchs 1 und ein Verfahren zur Bearbeitung von im Wesentlichen plattenförmigen Werkstücken gemäß dem Oberbegriff des Anspruchs 13, insbesondere für die Möbelindustrie. Eine solche Bearbeitungsmaschine und ein solches Verfahren sind aus der EP 1 464 470 A2 bekannt.

### TECHNISCHER HINTERGRUND DER ERFINDUNG

Aus dem Stand der Technik sind Bearbeitungsmaschinen für plattenförmige Werkstücke bekannt, bei denen die Werkstücke durch eine Fördereinrichtung gefördert und dann durch eine längs des Förderwegs angeordnete Bearbeitungsvorrichtung einer Bearbeitung unterzogen werden. Beispielhaft sei auf die
EP 1 464 470 A2 verwiesen.

Solche Maschinen erfuhren in den vergangenen Jahren eine dahingehende Weiterentwicklung, dass die Bearbeitungs- bzw. Durchlaufgeschwindigkeiten immer weiter gesteigert werden konnten. Hierbei ist allerdings zu beachten, dass beim Endanwender der Maschine häufig nicht Serien gleichartiger Werkstücke bearbeitet werden, sondern je nach Bedarf und Vorbearbeitung unterschiedliche Werkstücke zugeführt werden. Diese Unterschiede betreffen dabei nicht nur die Form der Werkstücke sondern insbesondere auch Kantenmaterialien (bzw. Beschichtungen), die durch einen möglichen vorherigen Bearbeitungsschritt insbesondere auf die Schmal- bzw. Seitenflächen des Werkstücks aufgebracht wurden.

Um ein ansprechendes Erscheinungsbild des fertig bearbeiteten Werkstücks sicher zu stellen, muss diesen Kantenmaterialien bei der Weiterbearbeitung des Werkstücks in einer Bearbeitungsmaschine Rechnung getragen werden. So ist beispielsweise für "Dickkanten" eine andere Bearbeitung notwendig als für "Dünnkanten". Eine mangelhafte oder fehlerhafte Berücksichtigung dieser Einflussfaktoren führt zu Ausschuss.

Der Stand der Technik schlägt in dieser Hinsicht unter anderem die mechanische Abtastung der für die Weiterbearbeitung neuralgischen Bereiche des Werkstücks vor. Als Alternative ist bekannt, die relevanten Daten unter einem Code zu hinterlegen, der am Werkstück angebracht ist und dann durch die Bearbeitungsmaschine entsprechend ausgelesen wird. Beide Maßnahmen sind allerdings gerade bei schnellen Maschinentaktungen fehleranfällig und in der praktischen Umsetzung arbeitsaufwendig.

Die EP 1 464 470 A2 schlägt eine Maschine vor, bei der optoelektronische Einrichtungen zur bildhaften Erfassung der Schmalseitenprofile eingesetzt werden. Durch eine geeignete Bildbearbeitung und Auswertung werden dann die entsprechenden Profile der Kanten zumindest annäherungsweise rekonstruiert. Dies gestattet es gemäß der EP 1 464 470 A2, Befehle zum Zurechtschneiden von überstehendem Kantenmaterial in Form von sog. Schneid-Trajektorien an eine entsprechende Bearbeitungsvorrichtung auszugeben.

Auch solche Verfahren stoßen allerdings dann an ihre Grenzen, wenn die Bearbeitungsgeschwindigkeit weiter gesteigert werden soll. Die Aufnahme eines Bildes in Form einer Art Datenwolke, deren Verarbeiten und das Berechnen des vollständigen Profils ist ein sehr komplexes Unterfangen, welches zwingend eine gewisse Rechenzeit in Anspruch nimmt. Bei angestrebten Fördergeschwindigkeiten von mehreren Metern pro Minute ist dies nicht mehr praktikabel, da die Datenauswertung dem Maschinentakt schlicht nicht mehr folgen kann.

### DARSTELLUNG DER ERFINDUNG

Folglich ist ein Ziel der vorliegenden Erfindung, eine Bearbeitungsmaschine sowie ein entsprechendes Verfahren zur Bearbeitung von im Wesentlichen plattenförmigen Werkstücken bereitzustellen, mit denen die Entstehung von Ausschuss bei gleichzeitiger Erhöhung der Bearbeitungsgeschwindigkeiten reduziert werden kann.

Die Aufgabe wird durch eine Bearbeitungsmaschine gemäß Anspruch 1 sowie ein Verfahren gemäß Anspruch 13 gelöst.

Eine wesentliche Idee der vorliegenden Erfindung ist dabei, zunächst lediglich zu ermitteln, ob auf einer gegebenen Schmalfläche des Werkstücks eine Beschichtung angearbeitet ist oder nicht, und dieses Ergebnis zur Steuerung der weiteren Bearbeitung herzunehmen. In einem weiteren Schritt können bei Vorhandensein einer Beschichtung weitere Eigenschaften der Beschichtung ermittelt werden, die dann in geeigneter Weise der Maschinensteuerung übermittelt und innerhalb der Maschine zur Steuerung des Bearbeitungsablaufes sowie zur Steuerung und Regelung nachgelagerter Prozesse verwendet werden.

Insbesondere weist eine Bearbeitungsmaschine zur Bearbeitung von im Wesentlichen plattenförmigen Werkstücken, die bevorzugt zumindest abschnittweise aus Holz, Holzwerkstoffen, Verbundwerkstoffen oder Kunststoff bestehen, auf: eine Bearbeitungsvorrichtung zur Bearbeitung eines Werkstücks in einer Bearbeitungsrichtung, eine optische Erfassungsvorrichtung, eine Auswerteeinheit und eine Steuereinrichtung. Dabei ist die optische Erfassungsvorrichtung derart ausgelegt und angeordnet, dass sie bezüglich der Bearbeitungsrichtung vordere und hintere Endabschnitte eines zu bearbeitenden Werkstücks optisch erfassen kann und der Auswerteeinheit entsprechende Erfassungsergebnisse bereitstellt. Die Auswerteeinheit ist derart ausgelegt, dass sie auf Grundlage der Erfassungsergebnisse beurteilt, ob an den vorderen und/oder hinteren Endabschnitten des zu bearbeitenden Werkstücks eine Beschichtung vorhanden ist oder nicht, und der Steuereinrichtung entsprechende Beurteilungsergebnisse bereitstellt. Ferner ist die Steuereinrichtung derart ausgelegt, dass sie die weitere Bearbeitung des zu bearbeitenden Werkstücks durch die Bearbeitungsvorrichtung auf Grundlage der Beurteilungsergebnisse steuert.

Die Bearbeitungsvorrichtung kann mehrere Bearbeitungsaggregate aufweisen. Die Steuerung der weiteren Bearbeitung des zu bearbeitenden Werkstücks kann die selektive Aktivierung bzw. Deaktivierung von Bearbeitungsaggregaten innerhalb der Bearbeitungsvorrichtung und/oder die entsprechende Steuerung der Wirkung von Bearbeitungsaggregaten auf das Werkstück (z.B. in Form von Bearbeitungstrajektorien, der eingesetzten Werkzeugleistung, der Dauer der Einwirkung etc.) und/oder das Einwechseln bestimmter Bearbeitungsaggregate in die Bearbeitungsvorrichtung umfassen.

Durch Bereitstellung der optischen Erfassungsvorrichtung, der Auswerteeinheit und der Steuereinrichtung wird es möglich, die Bearbeitung eines Werkstücks durch die Bearbeitungsvorrichtung in Abhängigkeit davon zu steuern, ob am vorderen und/oder hinteren Endabschnitt des zu bearbeitenden Werkstücks eine Beschichtung vorhanden ist oder nicht. Dadurch kann die weitere Bearbeitung durch die Bearbeitungsvorrichtung an die Gegebenheiten an den hinteren/vorderen Endabschnitten angepasst werden, wodurch das Bearbeitungsergebnis verbessert werden kann. Ferner können Fehleinstellungen der Maschine, bei der von einer falschen Beschaffenheit der vorderen und/oder hinteren Endabschnitte ausgegangen wird, vermieden werden. Hierdurch kann der Ausschuss bei der Bearbeitung der Werkstücke reduziert werden.

Dadurch, dass die Auswerteeinheit zunächst lediglich beurteilt, ob eine Beschichtung vorhanden ist oder nicht, ist eine komplexe Bildauswertung unter erhöhtem Rechenaufwand unnötig und die entsprechenden Beurteilungsergebnisse stehen der Steuereinrichtung rasch bereit, was es ermöglicht, den Durchsatz bei der Bearbeitungsmaschine zu erhöhen.

Folglich steht insgesamt eine Bearbeitungsmaschine bereit, bei der die Entstehung von Ausschuss reduziert und gleichzeitig eine hohe Bearbeitungsgeschwindigkeit erlangt werden kann. Dadurch, dass die Maschine in die Lage versetzt wird, autonom Entscheidungen über die weiteren Bearbeitungsschritte zu treffen, kann ferner die Maschinenbedienung vereinfacht werden. Ferner wird der Aufwand durch das Bedienpersonal (Programmerstellung) verringert und die Prozesssicherheit wird erhöht.

Die Beschichtung kann dabei beispielsweise ein angeleimtes Kantenband, ein Kaschier- oder Foliermaterial, eine Ummantelung oder ein Umleimer sein. Die vorderen bzw. hinteren Endabschnitte können Seitenflächen bzw. Kanten des Werkstücks sein, die sich an Hauptflächen des Werkstücks anschließen. Bevorzugt verlaufen die vorderen und hinteren Endabschnitte quer zu Bearbeitungsrichtung.

Gemäß einer bevorzugten Ausführungsform weist die Bearbeitungsvorrichtung mehrere Bearbeitungsaggregate auf, und die Steuereinrichtung ist derart ausgelegt, dass sie die weitere Bearbeitung des Werkstücks dadurch steuert, dass sie zumindest eine Bearbeitung durch zumindest ein Bearbeitungsaggregat steuert und insbesondere unterbindet, wenn auf dem vorderen und/oder hinteren Endabschnitt des zu bearbeitenden Werkstücks keine Beschichtung vorhanden ist.

Hierdurch kann unter Beibehaltung eines schnellen Maschinentakts der Fall berücksichtigt werden, bei dem in Ermangelung einer Beschichtung eine bestimmte Nachbearbeitung am Werkstück angepasst werden muss bzw. gänzlich entfällt. Hierbei sei beispielhaft ein Fräsaggregat als Bearbeitungsaggregat angeführt, welches am Werkstück eine Abrundung bzw. Abfasung ausbilden soll, und zwar in Abhängigkeit davon, ob eine Beschichtung am vorderen und/oder hinteren Endabschnitt vorhanden ist oder nicht. Durch die bedarfsgerechte Ansteuerung des zumindest einen Bearbeitungsaggregats ist es folglich möglich, die Bearbeitungsmaschine in ihrer Wirkung individuell und in Echtzeit an das jeweilige Werkstück anzupassen, was den Aufwand Seitens des Bedienpersonals und den Ausschuss weiter reduziert.

Gemäß einer bevorzugten Ausführungsform ist die Auswerteeinheit ferner derart ausgelegt, dass sie bei Vorhandensein einer Beschichtung an dem vorderen und/oder hinteren Endabschnitt des zu bearbeitenden Werkstücks aus den Erfassungsergebnissen die Materialstärke der entsprechenden Beschichtung ermittelt und der Steuereinrichtung die ermittelte Materialstärke bereitstellt. Dabei ist die Steuereinrichtung ferner derart ausgelegt, dass sie die weitere Bearbeitung des zu bearbeitenden Werkstücks durch die Bearbeitungsvorrichtung auf Grundlage der ermittelten Materialstärke steuert.

Dadurch, dass die Materialstärken nur bei Vorhandensein der Beschichtung ermittelt werden, kann bei der Auswertung und Steuerung Rechenzeit eingespart werden, was eine rasche Bearbeitung ermöglicht. Durch die Berücksichtigung der Materialstärken kann die Bearbeitung gleichzeitig noch besser an das entsprechende Werkstück angepasst werden, was den Ausschuss weiter reduziert.

Gemäß einer bevorzugten Ausführungsform ist die Auswerteeinheit ferner derart ausgelegt, dass sie aus den Erfassungsergebnissen weitere Parameter der Beschichtung bestimmt und diese der Steuereinrichtung bereitstellt, wobei die Steuereinrichtung dann ferner derart ausgelegt ist, dass sie die weitere Bearbeitung des zu bearbeitenden Werkstücks durch die Bearbeitungsvorrichtung auf Grundlage der weiteren Parameter steuert.

Dadurch, dass die weiteren Parameter nur bei Vorhandensein einer Beschichtung ermittelt werden, kann insbesondere im Vergleich zu Verfahren, bei denen standardmäßig die gesamte Kontur eines Endabschnitts berechnet wird, eine beträchtliche Zeitersparnis erlangt werden. Auch aufgrund der Tatsache, dass sich die weitere Steuerung dann auf diese endliche Anzahl weiterer Parameter (anstatt auf eine die Kontur repräsentierende Punktewolke) stützt, können eine wesentliche Verringerung der zu übertragenden Datenmengen und eine schnellere Verarbeitung erlangt werden.

Bevorzugt umfassen die weiteren Parameter die Übergangsradien der entsprechenden Beschichtung zum zu bearbeitenden Werkstück und/oder die Übergangsfasen der entsprechenden Beschichtung zum zu bearbeitenden Werkstück und/oder die Dicke des zu bearbeitenden Werkstücks.

Mit diesen Parametern ist eine auf die weitere Bearbeitung zweckgerichtete Charakterisierung der Beschichtung möglich. Selbst wenn hierbei all diese Parameter berücksichtigt werden, umfasst der Parametersatz pro Beschichtung nur sehr wenige Kenngrößen, die durch die Steuereinrichtung ohne großen Aufwand in Steuerungsbefehle an die Bearbeitungsvorrichtung umgesetzt werden können. Die Daten selbst sind aus den Erfassungsergebnissen der optischen Erfassungsvorrichtung einfach auszulesen und erfordern insbesondere kein rechenintensives Herausfiltern von einzelnen, die Kontur der Kante repräsentierenden Punkten aus einem Bild.

Als Weiterbildung ist ferner denkbar, dass die den ermittelten Parametern entsprechenden Ansteuerbefehle zur Steuerung der Bearbeitungsvorrichtung bereits vorab in einer in einem Speicher der Steuereinrichtung angelegten elektronischen Zuordnungstabelle hinterleget sind, womit zur geeigneten Ansteuerung der Bearbeitungsvorrichtung lediglich eine Zuordnung zu den Werten in der Zuordnungstabelle und keine Neuberechnung der Ansteuerbefehle (z.B. in Form von Schneidtrajektorien) notwendig ist.

Gemäß einer bevorzugten Ausführungsform ist die Auswerteeinheit ferner derart ausgelegt, dass sie bei Vorhandensein einer Beschichtung an dem vorderen und/oder hinteren Endabschnitt des zu bearbeitenden Werkstücks die Materialstärke der entsprechenden Beschichtung ermittelt, die ermittelte Materialstärke mit einem vorbestimmten Schwellwert vergleicht und die weiteren Parameter nur bei Überschreitung des Schwellwerts bestimmt.

Hierdurch kann die Bestimmung der Parameter auf den Anwendungsbereich reduziert werden, bei dem eine Bestimmung der Parameter auch wirklich notwendig ist. Bei Materialkanten, die eine bestimmte Materialstärke unterschreiten, sind beispielsweise die Übergangsradien bzw. Übergangsfasen so wenig ausgeprägt, dass eine darauf angepasste Bearbeitung entbehrlich ist. Bei höheren Materialstärken kann dies allerdings sehr wohl erforderlich sein, um ein ansprechendes Erscheinungsbild des bearbeiteten Werkstücks zu erlangen. Durch die getroffene Auswahl in Abhängigkeit der Materialstärke kann eine hohe Bearbeitungsgeschwindigkeit durch die Maschine gewährleistet werden.

Gemäß einer bevorzugten Ausführungsform weist die Bearbeitungsvorrichtung ferner mehrere Bearbeitungsaggregate auf, und die Auswerteinheit ist derart ausgelegt, dass sie bei Vorhandensein einer Beschichtung an dem vorderen und/oder hinteren Endabschnitt des zu bearbeitenden Werkstücks die Materialstärke der entsprechenden Beschichtung ermittelt, die ermittelte Materialstärke mit einem vorbestimmten Schwellwert vergleicht, und die weitere Bearbeitung dadurch steuert, dass sie zumindest eine Bearbeitung durch zumindest ein Bearbeitungsaggregat steuert und insbesondere unterbindet, wenn der Schwellwert durch die Materialstärke der entsprechenden Beschichtung unterschritten ist.

Hierdurch ist es möglich, selektiv auf die Beschaffenheit der Beschichtung und insbesondere deren Materialstärke zu reagieren. Hierdurch können Fehlbedienungen der Maschine weiter reduziert werden.

Gemäß einer bevorzugten Ausführungsform ist in der Bearbeitungsmaschine die optische Erfassungsvorrichtung derart angeordnet, dass sie den vorderen und/oder hinteren Endabschnitt des zu bearbeitenden Werkstücks in einer Projektion auf eine Ebene erfasst, die im Wesentlichen parallel zur Bearbeitungsrichtung und senkrecht zu zumindest einer Hauptfläche des zu bearbeitenden Werkstücks ist.

Mit dieser Konfiguration kann sichergestellt werden, dass die für die weitere Bearbeitung relevanten Eigenschaften einer etwaig auf den vorderen und/oder hinteren Endabschnitten vorhandenen Beschichtung sicher erfasst werden können. Mit anderen Worten, erfasst die Erfassungsvorrichtung so einen Bildbereich, welcher dem Profil der Beschichtung entspricht (ohne dass das Profil ausgemessen wird). Folglich kann durch die Auswerteeinheit in einer nachfolgenden Auswertung der Erfassungsergebnisse einfach auf das Vorhandensein bzw. nicht-Vorhandensein einer Beschichtung sowie die etwaigen Parameter der Beschichtung geschlossen werden.

Insbesondere bevorzugt verlaufen die vorderen und/oder hinteren Endabschnitte des zu bearbeitenden Werkstücks quer zur Bearbeitungsrichtung und die "Blickrichtung" der optischen Erfassungsvorrichtung ist im Wesentlichen auf die Seiten des Werkstücks gerichtet, die in die Bearbeitungsrichtung verlaufen.

Somit erlaubt diese Ausgestaltung eine sichere Erfassung der Beschichtung.

Gemäß einer bevorzugten Ausführungsform weist die Bearbeitungsmaschine ferner eine Fördereinrichtung zur Förderung des zu bearbeitenden Werkstücks in einer Förderrichtung auf, wobei die Fördereinrichtung parallel zur Bearbeitungsrichtung ist. Die Förderung erfolgt im Durchlauf und die Fördergeschwindigkeit beträgt weniger als 200 m/min, bevorzugt 5m/min bis 150 m/min und insbesondere bevorzugt 15 m/min bis 50 m/min.

Durch die Förderung im Durchlauf können sehr hohe Taktzahlen erlangt werden. Dies wirkt in vorteilhafter Weise mit der zuvor beschriebenen Ausgestaltung der Maschine hinsichtlich der optischen Erfassungsvorrichtung sowie der Auswerteeinheit und der Steuereinrichtung zusammen, welche ebenfalls auf eine rasche Datenverarbeitung ausgelegt sind. Dies betrifft insbesondere die auf einige wenige relevante Punkte reduzierte Analyse der Erfassungsergebnisse durch die Auswerteeinheit.

Gemäß einer bevorzugten Ausführungsform weist die optische Erfassungsvorrichtung zwei Erfassungseinrichtungen auf, die in Bearbeitungsrichtung hintereinander angeordnet sind.

Dies ermöglicht beispielsweise eine gesonderte Erfassung der vorderen und hinteren Endabschnitte des zu bearbeitenden Werkstücks und damit eine noch raschere und genauere Erfassung der für die Weiterverarbeitung relevanten Beschaffenheit des Werkstücks.

Gemäß einer weiter bevorzugten Ausführungsform kann die optische Erfassungsvorrichtung alternativ bzw. zusätzlich hierzu ein Paar aus zwei optischen Erfassungseinrichtungen aufweisen, die sich über das zu bearbeitende Werkstück hinweg in einer Richtung senkrecht zur Bearbeitungsrichtung gegenüberliegen.

Somit kann eine Erfassung der vorderen und hinteren Endabschnitte des zu bearbeitenden Werkstücks von beiden Seiten in der Bearbeitungsrichtung erfolgen. Die Bearbeitung kann folglich auf etwaige Unterschiede auf beiden Seiten des Werkstücks eingehen, was das Bearbeitungsergebnis weiter verbessert.

Vorteilhafterweise ist dies mit einer Bearbeitungsvorrichtung zu kombinieren, welche (bezogen auf die Bearbeitungsrichtung) für eine Bearbeitung auf beiden Seiten des Werkstücks geeignet ist.

Gemäß einer bevorzugten Ausführungsform ist die optische Erfassungsvorrichtung ein bildgebendes System.

Dies ermöglicht eine technisch einfache Umsetzung der optischen Erfassung der vorderen und hinteren Endabschnitte des Werkstücks und gewährleistet eine einfache Analyse der Erfassungsergebnisse. So könnte beispielsweise Farb- bzw. Grauwerte aus dem Erfassungsergebnis ausgelesen und in die gewünschten Informationen überführt werden.

Alternativ hierzu ist auch eine Abtastung mit den Strahlen aus einer Strahlungsquelle, wie einem Laser, und die Messung der am Werkstück reflektierten Strahlen denkbar.

Gemäß einer bevorzugten Ausführungsform weist die Bearbeitungsmaschine ferner eine Sensoreinrichtung zur Erfassung von Lagedaten, insbesondere einer Position und/oder Länge, des zu bearbeitenden Werkstücks auf, die der Steuereinrichtung entsprechende Lageerfassungsergebnisse bereitstellt, wobei die Bearbeitungsmaschine ferner derart ausgelegt ist, dass die optische Erfassung der vorderen und hinteren Endabschnitte des zu bearbeitenden Werkstücks durch die optische Erfassungsvorrichtung auf Grundlage der Lageerfassungsergebnisse der Sensoreinrichtung aktiviert wird.

Insbesondere ist die Bearbeitungsmaschine derart ausgelegt, dass Erfassungsergebnisse nur dann ermittelt werden, wenn auf Grundlage der Lageerfassungsergebnisse, also insbesondere der Position und/oder Länge des zu bearbeitenden Werkstücks, geschlossen werden kann, dass der Erfassungsbereich der optischen Erfassungsvorrichtungen den vorderen bzw. hinteren Endabschnitt des Werkstücks enthält. Dies reduziert die anfallende Datenmenge und folglich die zu deren Auswertungen notwendige Zeit. Ferner garantiert die auf die Position bzw. Länge des Werkstücks abgestimmte Erfassung ein akkurates Erfassungsergebnis.

Darüber hinaus ist bevorzugt, dass die Steuereinrichtung derart ausgelegt ist, dass sie die weitere Bearbeitung des zu bearbeitenden Werkstücks durch die Bearbeitungsvorrichtung durch die Steuereinrichtung auf Grundlage der Lageerfassungsergebnisse steuert, was einer akkuraten Bearbeitung zu Gute kommt.

Gemäß bevorzugten Ausführungsformen ist die Auswerteeinheit entweder direkt in die optische Erfassungsvorrichtung oder in die Steuereinrichtung integriert.

Beide Lösungen stellen effektive Wege dar, die erfassten Daten schnell zu verarbeiten und in die weitere Steuerung der Maschine einfließen zu lassen. Ist die Auswerteeinheit in die optische Erfassungsvorrichtung integriert, werden der Steuereinrichtung somit nur die Auswerteergebnisse zugeführt, weshalb der in der Steuereinrichtung anfallende Rechenaufwand reduziert werden kann. Insbesondere wenn die Erfassungsvorrichtung mehrere Erfassungseinrichtungen aufweist und die Auswerteeinheit jeweils an den Erfassungsvorrichtungen angeordnet ist, kann somit eine Parallelverarbeitung der Erfassungsergebnisse erfolgen, was Rechenzeit spart. Bei Integration in die Steuereinrichtung kann auf die Architektur der Steuereinrichtung zurückgegriffen werden was es gegebenenfalls ermöglicht, eine höhere Rechenleistung zur Auswertung der Erfassungsergebnisse einzusetzen. Auch hierdurch kann die Verarbeitung der Erfassungsergebnisse ggf. beschleunigt werden.

Im Folgenden wird ein Verfahren zur Bearbeitung von im wesentlichen plattenförmigen Werkstücken, die bevorzugt zumindest abschnittsweise aus Holz, Holzwerkstoffen, Verbundwerkstoffen oder Kunststoffen bestehen, mit einer Bearbeitungsmaschine beschrieben, welche eine optische Erfassungsvorrichtung und eine Bearbeitungsvorrichtung zur Bearbeitung eines Werkstücks in einer Bearbeitungsrichtung aufweist. Das Verfahren umfasst die folgenden Schritte: Optisches Erfassen von in der Bearbeitungsrichtung vorderen und hinteren Endabschnitten des zu bearbeitenden Werkstücks zur Erzeugung von entsprechenden Erfassungsergebnissen mit der optischen Erfassungsvorrichtung; Beurteilen, ob an den vorderen und/oder hinteren Endabschnitten des Werkstücks eine Beschichtung vorhanden ist oder nicht, zur Erzeugung von entsprechenden Beurteilungsergebnissen, wobei das Beurteilen durch Auswerten der Erfassungsergebnisse erfolgt; und Steuern der weiteren Bearbeitung des Werkstücks durch die Bearbeitungsvorrichtung auf Grundlage der Beurteilungsergebnisse.

Das Steuern der weiteren Bearbeitung auf Grundlage der Beurteilungsergebnisse kann beispielsweise eine Entscheidung beinhalten, ob ein bestimmtes Bearbeitungsverfahren (das gegebenenfalls mit einem bestimmten Bearbeitungsaggregat ausgeführt wird) zur Anwendung gelangt oder nicht. Daneben können zur Steuerung der weiteren Bearbeitung Stellgrößen eines Bearbeitungsverfahrens eingestellt werden.

Mit dem beschriebenen Verfahren kann die weitere Bearbeitung des Werkstücks auf Grundlage einer Beurteilung vorgenommen werden, ob eine Beschichtung an den vorderen und/oder hinteren Endabschnitten vorhanden ist oder nicht, was das Bearbeitungsergebnis verbessert und die Prozesssicherheit erhöht. Dadurch das zunächst nur eine Beurteilung vorgenommen wird, ob eine Beschichtung vorhanden ist oder nicht, kann ferner das Auswerten der Erfassungsergebnisse vereinfacht werden, was es erlaubt, das Verfahren in einer raschen Taktung der Verfahrensschritte zu betreiben.

Ferner wird die Bearbeitung des Werkstücks an die Gegebenheiten des einzelnen Werkstücks individuell angepasst. Das Verfahren ist somit besser handhabbar und gewährleistet gleichzeitig eine Reduzierung des Ausschusses.

Gemäß einer bevorzugten Ausführungsform des Verfahrens erfolgt die Bearbeitung Im Durchlauf der Werkstücke mit einer Fördergeschwindigkeit der Werkstücke von weniger als 200 m/min, bevorzugt 5m/min bis 150 m/min und insbesondere bevorzugt 15 m/min bis 50 m/min.

Gemäß einer bevorzugten Ausführungsform des Verfahrens erfolgt das optische Erfassen der vorderen und hinteren Endabschnitte des zu bearbeitenden Werkstücks in einer Projektion auf eine Ebene, die im Wesentlichen parallel zur Bearbeitungsrichtung (bzw., bei Förderung im Durchlauf, parallel zur Förderrichtung) und senkrecht zu zumindest einer Hauptfläche des zu bearbeitenden Werkstücks ist.

Dies garantiert eine sichere Erfassung der vorderen und hinteren Endabschnitte und damit eine effektive Beurteilung, ob eine Beschichtung auf den vorderen und hinteren Endabschnitten vorhanden ist oder nicht. Ferner gestattet dies eine einfachere Auswertung der Erfassungsergebnisse, was eine beschleunigte Abfolge der Verfahrensschritte begünstigt.

Gemäß einer bevorzugten Ausführungsform des Verfahrens weist das Verfahren ferner die Schritte auf: Ermitteln der Materialstärke der Beschichtung an dem vorderen und/oder hinteren Endabschnitt des zu bearbeitenden Werkstücks durch Auswerten der Erfassungsergebnisse, falls im Beurteilungsschritt das Vorhandensein einer Beschichtung an dem entsprechenden Endabschnitt des zu bearbeitenden Werkstücks festgestellt wurde, und Steuern der weiteren Bearbeitung des Werkstücks durch die Bearbeitungsvorrichtung auf Grundlage der ermittelten Materialstärke.

Ähnlich wie bei der zuvor erläuterten Vorrichtung kann dadurch eine bedarfsgerechte und effiziente Erfassung bzw. Auswertung erlangt werden. Die Steuerung auf Grundlage der ermittelten Materialstärke kann beispielsweise bedeuten, dass einzelne, durch die Bearbeitungsvorrichtung ausgeführte Bearbeitungsverfahren angepasst bzw. ausgesetzt werden, wenn die ermittelte Materialstärke gewisse Werte aufweist.

Gemäß einer bevorzugten Ausführungsform des Verfahrens sind ferner die Schritte vorgesehen: Vergleichen der ermittelten Materialstärke mit einem vorbestimmten Schwellwert, und, falls die ermittelte Materialstärke den vorbestimmten Schwellwert überschreitet, Bestimmen weiterer Parameter der entsprechenden Beschichtung durch Auswerten der Erfassungsergebnisse und Steuern der weiteren Bearbeitung des Werkstücks durch die Bearbeitungsvorrichtung auf Grundlage der weiteren Parameter.

Verfahrensschritte, die z.B. für eine Materialstärke unterhalb eines vorbestimmten Schwellwertes überflüssig wären, können somit eingespart werden, was die Effektivität des Verfahrens weiter steigert. Andererseits können gegebenenfalls relevante Parameter dennoch in die Steuerung der weiteren Bearbeitung einfließen. Als Beispiel sei hier der Übergangsradius zwischen der Beschichtung und den Hauptflächen des Werkstücks benannt. Wird festgestellt, dass die Materialstärke einer in einem Endabschnitt vorhandenen Beschichtung den vorbestimmten Schwellwert überschreitet (d.h. es handelt sich beispielsweise um eine Dickkante) kann beispielsweise der Übergangsradius als weiterer Parameter ausgewertet werden. Die weitere Steuerung der Bearbeitung des Werkstücks kann an diesen Übergangsradius angepasst werden, sodass insbesondere am Stoßbereich der Beschichtung ein ebenmäßiges Erscheinungsbild am Werkstück erlangt wird.

### KURZE BESCHREIBUNG DER ZEICHNUNGEN

Figur 1 zeigt eine schematische Perspektivansicht einer Bearbeitungsmaschine gemäß einer Ausführungsform.
Figur 2 zeigt eine Detailansicht einer Seitenkante eines in der Bearbeitungsmaschine geförderten Werkstücks.
Die Figuren 3a und 3b zeigen vordere bzw. hintere Endabschnitte eines Werkstücks und entsprechende Erfassungsbereiche von optischen Erfassungsvorrichtungen der Bearbeitungsmaschine im Detail.

### AUSFÜHRLICHE BESCHREIBUNG BEVORZUGTER AUSFÜHRUNGSFORMEN DER ERFINDUNG

Bevorzugte Ausführungsformen der vorliegenden Erfindung werden nachfolgend ausführlich mit Bezugnahme auf die begleitenden Zeichnungen beschrieben. Weitere in diesem Zusammenhang genannte Modifikationen können jeweils miteinander kombiniert werden, um neue Ausführungsformen auszubilden.

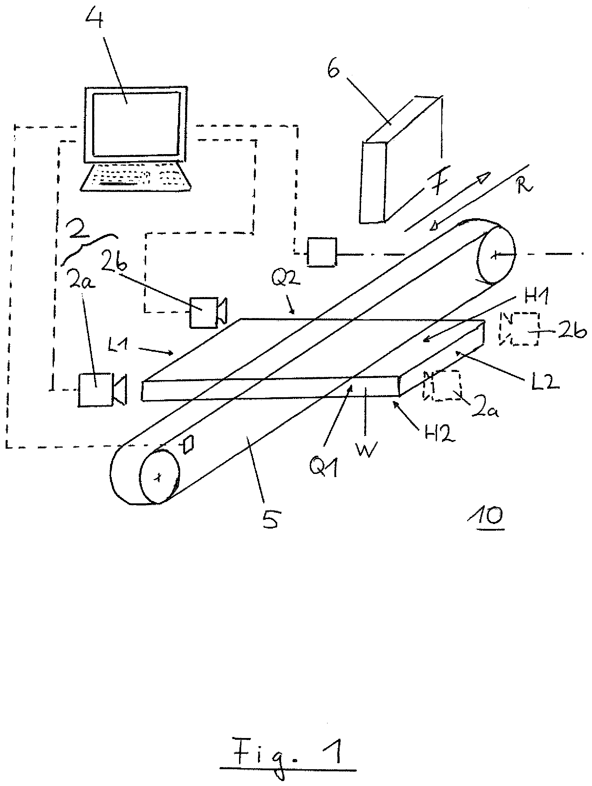

Figur 1 stellt eine Ausführungsform einer Bearbeitungsmaschine 10 in einer vereinfachten Perspektivenansicht dar. Die Bearbeitungsmaschine 10 ist dabei zur Bearbeitung von im Wesentlichen plattenförmigen Werkstücken W geeignet.

Beispielhaft ist in der Zeichnung eine flache Platte mit zwei Hauptflächen H1 und H2, zwei Längsseiten L1 und L2 und zwei Querseiten Q1 und Q2 als Werkstück W dargestellt. Die Längs- und Querseiten sind die Schmalflächen des Werkstücks W.

In der Bearbeitungsmaschine 10 wird das Werkstück W durch eine Fördereinrichtung 5 im Durchlauf in eine Förderrichtung F gefördert. Dabei erfolgt die Förderung bevorzugt so, dass sich die Längsseiten L1 und L2 im Wesentlichen in Förderrichtung F erstrecken. Durch die Fördereinrichtung 5 werden die Werkstücke W zu einer Bearbeitungsvorrichtung 6 gefördert, wo insbesondere eine Bearbeitung der Längsseiten L1 oder L2 stattfindet. Hierfür kann die Bearbeitungsvorrichtung 6 mehrere nicht gezeigte Bearbeitungsaggregate aufweisen.

Bei der Bearbeitungsmaschine 10 soll eine Bearbeitung des Werkstücks W durch die Bearbeitungsvorrichtung 6 an eine gegebenenfalls auf den Querseiten Q1 und Q2 vorhandene Beschichtung B (vorliegend insbesondere Kantenbänder) angepasst werden.

Die Beschichtung B kann dabei verschiedene Eigenschaften aufweisen. Um ein besonders hochwertiges Erscheinungsbild des fertigen Produkts zu erlangen, sind hinsichtlich der weiteren Bearbeitung durch die Bearbeitungsvorrichtung 6 insbesondere die Dicke D der Beschichtung B sowie deren Verhalten am Übergang zu den Hauptflächen H1 und H2 relevant. Hierbei ist insbesondere ein etwaiger vorhandener Übergangradius der Beschichtung B bzw. eine Übergangsfase der Beschichtung B am Übergang zu den Hauptflächen H1 und H2 des Werkstücks W von Bedeutung. So bestimmen diese Eigenschaften der Beschichtung B beispielsweise ob und in welchem Umfang eine Fräsbearbeitung am Werkstück W bzw. der Beschichtung auf den Querseiten Q1 und Q2 sowie einer (gegebenenfalls noch aufzubringenden) Beschichtung an den Schmalseiten L1 und L2 auszuführen ist, um eine hochwertige Haptik und Optik zu erzielen. Da die Wahrnehmung eines fertig bearbeiteten Werkstücks maßgeblich durch die Ausarbeitung der Übergangsbereiche (also zwischen Haupt- und Schmalflächen bzw. der Beschichtung) bestimmt wird, sind die anderen Bereiche des Profils der Beschichtung, also insbesondere der Abschnitt zwischen den Stoßkanten an andere Abschnitte des Werkstücks von geringerer Bedeutung.

Im Hinblick auf eine schnelle und zuverlässige Bearbeitung der Werkstücke stellt die Bearbeitungsmaschine 10 auf die für die weitere Bearbeitung besonders relevanten Eigenschaften der Beschichtung ab und lässt weniger relevante Aspekte außen vor. Folglich wird auf die Erfassung des vollständigen Profils der Beschichtung B verzichtet.

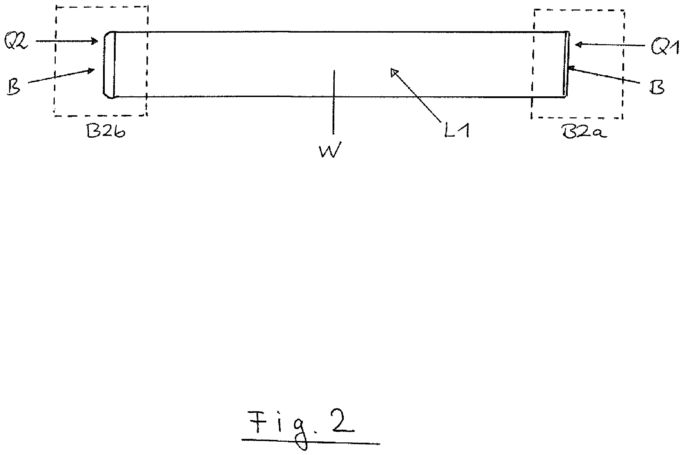

Die Bearbeitungsmaschine 10 verfügt über eine optische Erfassungsvorrichtung 2. Die optische Erfassungsvorrichtung 2 weist in der gezeigten Ausführungsform zwei optische Erfassungseinrichtungen 2a und 2b auf, welche entlang der Förderrichtung F hintereinander am Förderweg des geförderten Werkstücks W angeordnet sind. Die Erfassungseinrichtungen 2a und 2b sind derart angeordnet, dass sie auf die Längsseite L1 des Werkstücks W gerichtet sind. Sie sind somit insbesondere in der Lage, die vorderen und hinteren Endabschnitte (vorliegend die Querseiten Q1 und Q2) des geförderten Werkstücks in einer Projektion auf eine Ebene zu erfassen, die im Wesentlichen parallel zur Förderrichtung F und senkrecht zu zumindest einer Hauptfläche H1, H2 des geförderten Werkstücks W ist. Damit sind sie auf die Längsseiten L1 und L2 gerichtet und können die Längsseiten Q1 und Q2 "im Profil" erfassen (siehe Figur 2).

Vorliegend ist für jede der beiden Querseiten Q1 und Q2 eine optische Erfassungseinrichtung 2a, 2b vorhanden. Die Erfassungseinrichtung 2a soll dabei insbesondere die hintere Querseite Q1 erfassen, während die Erfassungseinrichtung 2b die vordere Querseite Q2 erfassen soll. Allerdings ist auch denkbar, die optische Erfassungsvorrichtung 2 mit lediglich einer optischen Erfassungseinrichtung auszustatten welche dann die vorderen und hinteren Querkanten Q1 und Q2 nacheinander erfasst.

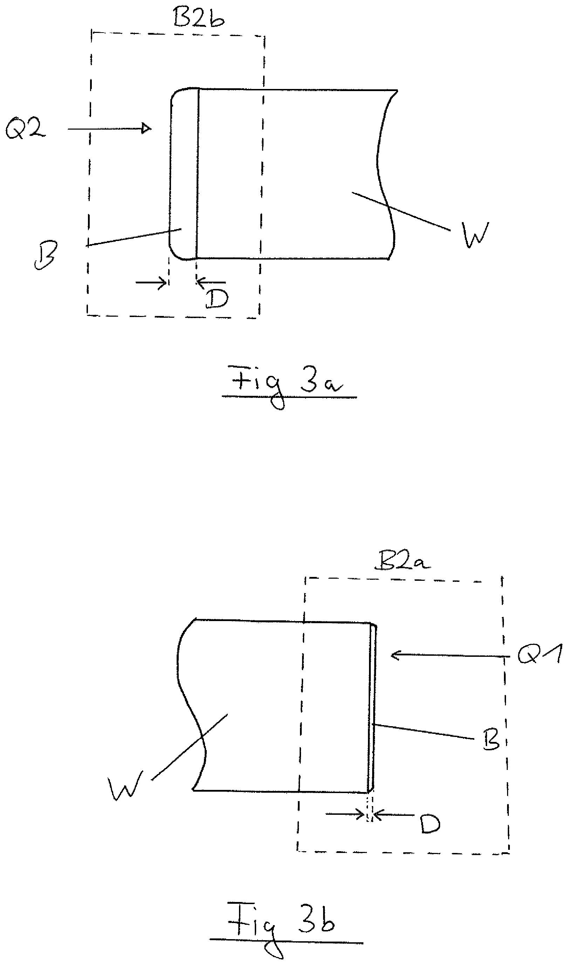

Die optische Erfassungsvorrichtung 2 ist bevorzugt ein bildgebendes System. Die Bildbereiche B2a und B2b für die optischen Erfassungseinrichtungen 2a und 2b der optischen Erfassungsvorrichtung 2 sind in Figuren 2, 3a und 3b skizziert. Wie aus diesen Zeichnungen ersichtlich, umfassen die Bildbereiche der optischen Erfassungseinrichtungen 2a und 2b jeweils einen Teil der Längsseite L1 sowie die Querseiten Q1, Q2 im Profil. Ist die optische Erfassungsvorrichtung 2 ein bildgebendes System, bildet sie die Bildbereiche ab und stellt die dadurch erzeugten Bilddaten als Erfassungsergebnisse bereit.

Die Bearbeitungsvorrichtung 6 verfügt über mehrere nicht gezeigte Bearbeitungsaggregate, welche beispielsweise Fräsaggregate oder Kanten-Abziehaggregate aber auch Kanten-Anleimaggregate (für die Längsseiten) einschließen können.

Ferner weist die Bearbeitungsmaschine 10 eine Steuereinrichtung 4 auf, welche mit der optischen Erfassungsvorrichtung 2 und der Bearbeitungsvorrichtung 6 in Verbindung steht (beispielsweise über eine Leitungsverbindung oder ein drahtloses Netzwerk). Die Steuereinrichtung 4 ist dabei insbesondere geeignet, die Bearbeitungsvorrichtung 6 entsprechend zu steuern, und insbesondere einzelne Bearbeitungsaggregate innerhalb der Bearbeitungsvorrichtung 6 einzustellen, zu aktivieren oder zu deaktivieren.

Darüber hinaus weist die Bearbeitungsmaschine 10 eine Auswerteeinheit auf, welche in den Zeichnungen nicht explizit dargestellt ist. Die Auswerteeinheit kann in die optische Erfassungsvorrichtung 2 oder die Steuereinrichtung 4 integriert sein. In jedem Fall steht sie mit beiden in Verbindung, so dass sie Erfassungsergebnisse von der optischen Erfassungsvorrichtung 2 erhalten und Auswerteergebnisse an die Steuereinrichtung 4 weitergeben kann.

Im Interesse einer raschen Verarbeitungsgeschwindigkeit und eines hohen Durchsatzes durch die Bearbeitungsmaschine 10 erfolgt bei der Erstellung der Auswerteergebnisse in der Auswerteeinheit keine vollständige Bildanalyse der Bildbereiche 2a und 2b (um etwa das Profil der Querkante bzw. der darauf aufgebrachten Beschichtung B vollständig zu extrahieren). Die Auswerteeinheit ist vielmehr derart ausgelegt, dass sie auf Grundlage der Erfassungsergebnisse zunächst lediglich beurteilt, ob an den vorderen und/oder hinteren Endabschnitten (also den Querseiten Q1 und Q2) des geförderten Werkstücks W eine Beschichtung B vorhanden ist oder nicht. Diese Beurteilungsergebnisse werden dann der Steuereinrichtung 4 bereitgestellt.

Die Steuereinrichtung 4, ist derart ausgelegt, dass sie die weitere Bearbeitung des geförderten Werkstücks W durch die Bearbeitungsvorrichtung 6 auf Grundlage dieser Beurteilungsergebnisse steuert.

Hierfür kann sie beispielsweise zumindest eines der Bearbeitungsaggregate aktivieren bzw. deaktivieren und/oder die Bearbeitungsumfänge der Bearbeitungsaggregate einstellen.

Soll die Bearbeitungsvorrichtung 6 beispielsweise insbesondere den Stoßbereich zwischen den Quer- und Längsseiten (d.h. den Eckenbereich) des Werkstücks W bearbeiten, um die Längsseiten L1 und L2 an eine etwaige Beschichtung B auf den Querseiten Q1 und Q2 anzugleichen, ist folgendes Szenario denkbar: Stellt die Auswerteeinheit fest, dass auf den Querseiten Q1 und Q2 keine Beschichtung B vorhanden ist, so kann die Steuereinrichtung 4 die Bearbeitungsvorrichtung 6 derart steuern, dass eine dahingehende Bearbeitung durch ein entsprechendes Bearbeitungsaggregat unterbleibt. Wird das Vorhandensein einer Beschichtung B an einer der Querseiten Q1 oder Q2 festgestellt, kann die Steuereinrichtung 4 eine entsprechende Bearbeitung durch ein entsprechendes Bearbeitungsaggregat aktivieren.

Zur Unterstützung der optischen Erfassung der vorderen und hinteren Endabschnitte eines geförderten Werkstücks W weist die Bearbeitungsmaschine 10 ferner eine Sensoreinrichtung 1, 3 auf, welche insbesondere geeignet ist, die Position bzw. die Länge des Werkstücks in Förderrichtung F zu bestimmen.

Die Sensoreinrichtung 1, 3 wird dabei durch ein Belegungsschalter 1 und einen Drehgeber 3 gebildet. Der Belegungsschalter 1 wird betätigt, wenn dieser mit einem Werkstück W belegt ist. Der Drehgeber 3 gibt eine Impulszahl der Fördereinrichtung 5 aus. In Zusammenwirkung des Belegungsschalters 1 und des Drehgebers 3 kann damit nicht nur die Position des vorderen Endabschnitts des Werkstücks auf dem Förderweg F abgeschätzt werden, sondern es ist auch möglich, die Länge des Werkstücks W zu erfassen. Dies kann so erfolgen, dass die Impulszahlen des Drehgebers 3 hochgezählt werden, wenn eine Belegung des Belegungsschalters 1 festgestellt ist. Diese Informationen (auch Lageerfassungsergebnisse genannt) können durch die Steuereinrichtung 4 dann beispielsweise zur Aktivierung der optischen Erfassungsvorrichtung 2 bzw. zum bedarfsgerechten und präzisen Bearbeiten des Werkstücks W durch die Bearbeitungsvorrichtung 6 verwendet werden.

Dadurch, dass die Auswerteeinheit aus den Erfassungsergebnissen zunächst lediglich beurteilt, ob eine Beschichtung B an der entsprechenden Querseite Q1 oder Q2 vorhanden ist oder nicht, kann der Rechenaufwand bei der Auswertung der Erfassungsergebnisse erheblich reduziert werden, wodurch die Prozesszeiten deutlich verringert werden können.

Eine rasche Auswertung ist im bildgebenden System in dieser Hinsicht beispielsweise anhand von Farb- oder Grauwerten möglich. Verändert sich im Bildbereich im Anschluss an das Werkstück W der Farb- oder Grauwert im Vergleich zum Hintergrund bzw. Werkstück, so kann beispielsweise auf das Vorhandensein einer Beschichtung geschlossen werden. Der Rechenaufwand für eine solche Auswertung ist sehr gering.

Ferner, erlaubt die Ausgestaltung der Bearbeitungsmaschine 10 die Auswertung der Erfassungsergebnisse schrittweise zu verfeinern.

Dabei erfolgen diese Verfeinerungsschritte nur dann, wenn eine Beschichtung B festgestellt wurde.

Als ein nächster Schritt kann beispielsweise die Materialstärke D der Beschichtung B bestimmt werden. Auch dies ist ein vergleichsweise wenig rechenaufwendiger Auswerteschritt. Auf Grundlage der ermittelten Materialstärken D kann die weitere Bearbeitung durch die Steuereinrichtung 4 entsprechend angepasst werden.

Ferner ermöglicht die Auswertung der Materialstärken D durch die Auswerteeinheit und deren Weitergabe an die Steuereinrichtung 4, dass zwischen einer dicken bzw. dünnen Beschichtung B (also zwischen einer Dickkante oder einer Dünnkante) unterschieden wird. Diese Unterscheidung kann für einige Anwendungen wichtig sein, da in Abhängigkeit des Vorhandenseins einer dünnen bzw. dicken Beschichtung B eine spezielle Bearbeitung erforderlich wird.

So ist beispielsweise denkbar, dass bei Vorhandensein einer Dünnkante einige Bearbeitungsschritte erst gar nicht erfolgen, welche bei einer Dickkante zum Erreichen eines ansprechenden Erscheinungsbildes zwingend notwendig sind. Denkbar wäre hier, dass bei Vorhandensein einer Dünnkante auf eine Abrundung oder Abfasung am Eckenbereich bzw. am Übergangsbereich zu den Hauptflächen H1 und H2 des Werkstücks W verzichtet wird, während dies bei einer Dickkante sehr wohl ausgeführt wird.

Ferner kann anhand der Schwellwerte festgestellt werden, ob beispielsweise weitere Parameter der Beschichtung B zu erfassen sind, um die weitere Bearbeitung durch die Bearbeitungsvorrichtung 6 entsprechend zu verbessern. So kann die Auswerteeinheit bei Überschreiten des Schwellwerts aus den Erfassungsergebnissen beispielsweise die Dicke des Werkstücks selbst sowie die Übergangsradien und/oder die Übergangsfasen der Beschichtung B zum geförderten Werkstück W erfassen. Bei letzterem wird sich auf den Übergangsbereich zwischen Beschichtung und Werkstück konzentriert, was die Auswertung der Erfassungsergebnisse im Vergleich zu einem vollständigen Auslesen der Profile der Beschichtung in Form einer Punktewolke deutlich vereinfacht.

Anhand der gefundenen Parameter kann die Steuereinrichtung 4 die weitere Verarbeitung durch die Bearbeitungsvorrichtung 6 entsprechend anpassen. Beispielsweise kann sie anhand der ermittelten Übergangsradien bestimmen, ob und in welcher Form eine Abrundung angrenzender Flächenelemente bzw. des Eckenbereichs des Werkstücks W notwendig ist. Hierfür können dann entsprechende Bearbeitungsaggregate in der Bearbeitungsvorrichtung 6 eingewechselt bzw. aktiviert werden. Ferner kann deren Anpressdruck bzw. deren Führung entsprechend angepasst werden.

Dadurch, dass die Auswerteeinheit zunächst nur ermittelt, ob eine Beschichtung vorhanden ist oder nicht und dann gegebenenfalls weitere spezifische Daten aus den Erfassungsergebnissen bestimmt, wird sich bei der Auswertung auf die relevanten Parameter konzentriert, die zudem nur bei Bedarf ermittelt werden. Im Vergleich zu einer vollständigen Auswertung des Profils der Querseiten Q1 und Q2 eines Werkstücks W kann sehr viel Zeit eingespart werden.

Auf die Berechnung eines solchen Profils wird bei der Bearbeitungsmaschine 10 gänzlich verzichtet. Selbst wenn eine Dickkante vorhanden ist, werden z.B. nur die Übergangsradien bzw. Übergangsfasen am Übergang der Dickkante zum geförderten Werkstück W ermittelt. Die für die Weiterverarbeitung wesentlichen Eigenschaften der Beschichtung B können auf effiziente Weise in einige wenige Kenngrößen kondensiert werden (Beschichtung ja/nein; Materialstärke der Beschichtung; Radius am Übergang zum Werkstück; Fase am Übergang zum Werkstück).

Da die Analyse der Werkstücke W so keinen begrenzenden Faktor bei der Bearbeitung der Werkstücke W mehr darstellt, kann die Maschinentaktung signifikant erhöht werden. Somit sind mit der dargestellten Ausführungsform Fördergeschwindigkeit der Größenordnung von 100 m/min, bevorzugt 5m/min bis 150 m/min, insbesondere im Bereich von 15 m/min bis 50 m/min und mitunter sogar Geschwindigkeiten bis zu 200 m/min denkbar.

Bei der Bearbeitungsmaschine 10 sind insbesondere folgende Modifikationen denkbar.

In der in Figur 1 dargestellten Ausführungsform ist eine Fördereinrichtung 5 vorgesehen, welche die Werkstücke W in einer Förder- bzw. Durchlaufrichtung F fördert. Die Bearbeitungsrichtung R durch die Bearbeitungsvorrichtung ist somit (bedingt durch den Vorbeitransport der Werkstücke W an der Bearbeitungsvorrichtung 6) parallel zur Förderrichtung F und entgegengesetzt dazu.

Als alternative Ausgestaltung ist auch denkbar, eine Bearbeitungsvorrichtung an einem Portal anzubringen, welche relativ zu einer Fördereinrichtung bzw. zu einem stationär gehaltenen Werkstück W bewegbar ist. Hierbei ist lediglich zu beachten, dass vor der Bearbeitung des Werkstücks durch die Bearbeitungsvorrichtung eine Erfassung der Querseiten des Werkstücks erfolgen sollte.

Ist die Bearbeitungsvorrichtung beispielsweise an einem Portal angeordnet, so ist die optische Erfassungsvorrichtung der Bearbeitungsvorrichtung in der Bearbeitungsrichtung vorgelagert. Dies ist beispielsweise durch Anordnen der optischen Erfassungsvorrichtung vor der Bearbeitungsvorrichtung am Portal möglich.

Alternativ/zusätzlich können sowohl die Bearbeitungsvorrichtung als auch die optische Erfassungseinrichtung an separaten bewegbaren Werkzeugträgervorrichtungen (insbesondere Auslegern) angeordnet sein, welche relativ zum Werkstück bewegbar sind. Auch hier muss gewährleistet sein, dass vor der Bearbeitung der Bearbeitungsvorrichtung eine optische Erfassung der Querseiten des Werkstücks erfolgen kann.

In der Zeichnung von Figur 1 wurde eine Bearbeitungsmaschine 10 dargestellt, bei der die Bearbeitungsvorrichtung 6 und die optische Erfassungsvorrichtung 2 an einer Seite des Förderwegs angeordnet sind. D.h. die Bearbeitung des Werkstücks W erfolgt an einer der Längsseiten L1 des Werkstücks W. Alternativ kann selbstverständlich auch eine Bearbeitung von beiden Seiten erfolgen. Hierfür kann die Bearbeitungsvorrichtung 6 Bearbeitungsaggregate aufweisen, die an beiden Seiten des Werkstücks W, d.h. zu beiden Seiten der Fördereinrichtung 5 angeordnet sind.

Diese Ausgestaltung kann durch Bereitstellen von Paaren 2a, 2a und 2b, 2b von optischen Erfassungseinrichtungen innerhalb der optischen Erfassungsvorrichtung ergänzt werden, wobei sich ein Paar 2a, 2a optische Erfassungseinrichtungen dann über den Förderweg des geförderten Werkstücks hinweg in einer Richtung senkrecht zur Förderrichtung gegenüberliegt.

Insgesamt ist die Anzahl der optischen Erfassungseinrichtungen innerhalb der optischen Erfassungsvorrichtung 2 beliebig und kann insbesondere dem spezifischen Einsatzgebiet angepasst werden. So sind beispielsweise bereits mit einer optischen Erfassungseinrichtung sehr gute Ergebnisse erzielbar. Alternativ kann die optische Erfassungsvorrichtung auch zwei optische Erfassungseinrichtungen 2a und 2b bzw. ein oder mehrere Paare optischer Erfassungsvorrichtungen 2a, 2a und 2b, 2b aufweisen.

Die Bearbeitungsmaschine 10 wurde anhand eines im Wesentlichen quaderförmigen Werkstücks W erklärt, welches zwei Hauptflächen H1 und H2, zwei Querseiten Q1 und Q2 sowie zwei Längsseiten L1 und L2 aufweist. Selbstverständlich sind die Verwendung der Bearbeitungsmaschine 10 und des entsprechenden Verfahrens nicht auf die Bearbeitung solcher Werkstücke begrenzt. Solange sich die vorderen und hinteren Endabschnitte des geförderten Werkstücks erfassen lassen, ist die Bearbeitungsmaschine 10 auch zur Bearbeitung von in jeglichen Formen schief zulaufenden Werkstücken geeignet.

Die optische Erfassungsvorrichtung wurde vorzugsweise als bildgebendes System beschrieben, bei dem die vorderen und/oder hinteren Endabschnitte des Werkstücks innerhalb der Abbildungs- oder Bildbereiche der optischen Erfassungseinrichtungen als Bild erfasst werden. Allerdings können unter den optischen Erfassungsvorrichtungen auch nicht-bildgebende Systeme verstanden werden, bei denen beispielsweise die Reflexion eines Laserstrahls oder anderer geeigneter Quellen herangezogen wird, um das Vorhandensein bzw. nicht-Vorhandensein einer Beschichtung sowie deren Dicke zu bestimmen.

## Patentansprüche

1. Bearbeitungsmaschine (10) zur Bearbeitung von im Wesentlichen plattenförmigen Werkstücken (W), die bevorzugt zumindest abschnittsweise aus Holz, Holzwerkstoffen, Verbundwerkstoffen oder Kunststoffen bestehen, wobei die Bearbeitungsmaschine aufweist:
eine Bearbeitungsvorrichtung zur Bearbeitung eines Werkstücks in einer Bearbeitungsrichtung (R),
eine optische Erfassungsvorrichtung (2),
eine Auswerteeinheit, und
eine Steuereinrichtung (4),
wobei
die optische Erfassungsvorrichtung (2) derart ausgelegt und angeordnet ist, dass sie bezüglich der Bearbeitungsrichtung (R) vordere und hintere Endabschnitte (Q1, Q2) eines zu bearbeitenden Werkstücks (W) optisch erfassen kann und der Auswerteeinheit entsprechende Erfassungsergebnisse bereitstellt, **dadurch gekennzeichnet, dass**
die Auswerteeinheit derart ausgelegt ist, dass sie auf Grundlage der Erfassungsergebnisse beurteilt, ob an dem vorderen und/oder hinteren Endabschnitt (Q1, Q2) des zu bearbeitenden Werkstücks (W) eine Beschichtung (B) vorhanden ist oder nicht, und der Steuereinrichtung (4) entsprechende Beurteilungsergebnisse bereitstellt, und
die Steuereinrichtung (4) derart ausgelegt ist, dass sie die weitere Bearbeitung des zu bearbeitenden Werkstücks (W) durch die Bearbeitungsvorrichtung (6) auf Grundlage der Beurteilungsergebnisse steuert.

2. Bearbeitungsmaschine (10) nach Anspruch 1, wobei
die Bearbeitungsvorrichtung mehrere Bearbeitungsaggregate aufweist, und
die Steuereinrichtung (4) ferner derart ausgelegt ist, dass sie die weitere Bearbeitung dadurch steuert, dass sie zumindest eine Bearbeitung durch zumindest eines der Bearbeitungsaggregate steuert und insbesondere unterbindet, wenn auf dem vorderen und/oder hinteren Endabschnitt (Q1, Q2) des zu bearbeitenden Werkstücks (W) keine Beschichtung (B) vorhanden ist.

3. Bearbeitungsmaschine (10) nach Anspruch 1 oder 2, wobei
die Auswerteeinheit ferner derart ausgelegt ist, dass sie bei Vorhandensein einer Beschichtung (B) an dem vorderen und/oder hinteren Endabschnitt (Q1, Q2) des zu bearbeitenden Werkstücks (W) aus den Erfassungsergebnissen die Materialstärke (D) der entsprechenden Beschichtung (B) ermittelt und der Steuereinrichtung (4) die ermittelte Materialstärke (D) bereitstellt, und
die Steuereinrichtung (4) ferner derart ausgelegt ist, dass sie die weitere Bearbeitung des zu bearbeitenden Werkstücks (W) durch die Bearbeitungsvorrichtung (6) auf Grundlage der ermittelten Materialstärke (D) steuert.

4. Bearbeitungsmaschine (10) nach einem der vorhergehenden Ansprüche, wobei
die Auswerteeinheit ferner derart ausgelegt ist, dass sie bei Vorhandensein einer Beschichtung (B) an dem vorderen und/oder hinteren Endabschnitt (Q1, Q2) des zu bearbeitenden Werkstücks (W) aus den Erfassungsergebnissen weitere Parameter der entsprechenden Beschichtung (B) bestimmt und diese der Steuereinrichtung (4) bereitstellt, und
die Steuereinrichtung (4) ferner derart ausgelegt ist, dass sie die weitere Bearbeitung des zu bearbeitenden Werkstücks (W) durch die Bearbeitungsvorrichtung (6) auf Grundlage der weiteren Parameter steuert, wobei die weiteren Parameter vorzugsweise die Übergangsradien der Beschichtung (B) zu dem zu bearbeitenden Werkstück (W) und/oder die Übergangsfasen der Beschichtung (B) zu dem zu bearbeitenden Werkstück (W) und/oder die Dicke des zu bearbeitenden Werkstücks (W) umfassen.

5. Bearbeitungsmaschine (10) nach Anspruch 4, wobei
die Auswerteeinheit ferner derart ausgelegt ist, dass sie bei Vorhandensein einer Beschichtung (B) an dem vorderen und/oder hinteren Endabschnitt (Q1, Q2) des zu bearbeitenden Werkstücks (W) die Materialstärke (D) der entsprechenden Beschichtung (B) ermittelt, die ermittelte Materialstärke (D) mit einem vorbestimmten Schwellwert vergleicht, und die weiteren Parameter der entsprechenden Beschichtung nur bei Überschreitung des Schwellwerts durch die Materialstärke (D) der entsprechenden Beschichtung bestimmt.

6. Bearbeitungsmaschine (10) nach einem der vorhergehenden Ansprüche, wobei
die Bearbeitungsvorrichtung mehrere Bearbeitungsaggregate aufweist,
die Auswerteeinheit ferner derart ausgelegt ist, dass sie bei Vorhandensein einer Beschichtung (B) an dem vorderen und/oder hinteren Endabschnitt (Q1, Q2) des zu bearbeitenden Werkstücks (W) die Materialstärke (D) der entsprechenden Beschichtung (B) ermittelt und die ermittelte Materialstärke (D) mit einem vorbestimmten Schwellwert vergleicht, und
die Steuereinrichtung (4) ferner derart ausgelegt ist, dass sie die weitere Bearbeitung dadurch steuert, dass sie zumindest eine Bearbeitung durch zumindest eines der Bearbeitungsaggregate steuert und insbesondere unterbindet, wenn der Schwellwert durch die Materialstärke (D) der entsprechenden Beschichtung an dem vorderen und/oder hinteren Endabschnitt (Q1, Q2) unterschritten ist.

7. Bearbeitungsmaschine (10) nach einem der vorhergehenden Ansprüche, wobei
die optische Erfassungsvorrichtung (2) derart angeordnet ist, dass sie den vorderen und/oder hinteren Endabschnitt (Q1, Q2) des zu bearbeitenden Werkstücks (W) in einer Projektion auf eine Ebene erfasst, die im Wesentlichen parallel zur Bearbeitungsrichtung (R) und senkrecht zu zumindest einer Hauptfläche des zu bearbeitenden Werkstücks (W) ist.

8. Bearbeitungsmaschine (10) nach einem der vorhergehenden Ansprüche, ferner mit
einer Fördereinrichtung (5) zur Förderung des zu bearbeitenden Werkstücks (W) in einer Förderrichtung (F), wobei die Förderrichtung (F) parallel zur Bearbeitungsrichtung (R) ist;
die Förderung im Durchlauf der Werkstücke (W) erfolgt; und die Fördergeschwindigkeit weniger als 200 m/min, bevorzugt 5m/min bis 150 m/min und insbesondere bevorzugt 15 m/min bis 50 m/min beträgt.

9. Bearbeitungsmaschine (10) nach einem der vorhergehenden Ansprüche, wobei
die optische Erfassungsvorrichtung (2) aufweist:
zwei oder mehr Erfassungseinrichtungen (2a, 2b), die in der Bearbeitungsrichtung (R) hintereinander angeordnet sind, und/oder.
ein oder mehrere Paare optischer Erfassungseinrichtungen (2a, 2a), die sich paarweise über das zu bearbeitende Werkstück (W) hinweg in einer Richtung senkrecht zur Bearbeitungsrichtung (R) gegenüberliegen.

10. Bearbeitungsmaschine (10) nach einem der vorhergehenden Ansprüche, wobei die optische Erfassungsvorrichtung (2) ein bildgebendes System ist.

11. Bearbeitungsmaschine (10) nach einem der vorhergehenden Ansprüche, ferner mit
einer Sensoreinrichtung (1, 3), die derart ausgelegt ist, dass sie Lagedaten des zu bearbeitenden Werkstücks (W) erfasst und der Steuereinrichtung entsprechende Lageerfassungsergebnisse bereitstellt, wobei
die Bearbeitungsmaschine (10) derart ausgelegt ist, dass die optische Erfassung der vorderen und hinteren Endabschnitte (Q1, Q2) des zu bearbeitenden Werkstücks (W) durch die optische Erfassungsvorrichtung auf Grundlage der Lageerfassungsergebnisse zu aktivieren ist.

12. Bearbeitungsmaschine (10) nach einem der vorhergehenden Ansprüche, wobei
die Auswerteeinheit in die optische Erfassungsvorrichtung (2) oder die Steuereinrichtung (4) integriert ist.

13. Verfahren zur Bearbeitung von im Wesentlichen plattenförmigen Werkstücken (W), die bevorzugt zumindest abschnittsweise aus Holz, Holzwerkstoffen, Verbundwerkstoffen oder Kunststoffen bestehen, mit einer Bearbeitungsmaschine, die eine optische Erfassungseinrichtung (2) und eine Bearbeitungsvorrichtung (6) zur Bearbeitung eines Werkstücks (W) in einer Bearbeitungsrichtung (R) aufweist, wobei das Verfahren die folgenden Schritte aufweist:
optisches Erfassen von in Bearbeitungsrichtung (R) vorderen und hinteren Endabschnitten (Q1, Q2) des zu bearbeitenden Werkstücks (W) zur Erzeugung von entsprechenden Erfassungsergebnissen mit der optischen Erfassungsvorrichtung (2);
**gekennzeichnet durch** Beurteilen, ob an den vorderen und hinteren Endabschnitten (Q1, Q2) des Werkstücks (W) eine Beschichtung (B) vorhanden ist oder nicht, zur Erzeugung von entsprechenden Beurteilungsergebnissen, wobei das Beurteilen durch Auswerten der Erfassungsergebnisse erfolgt; und
Steuern der weiteren Bearbeitung des Werkstücks (W) durch die Bearbeitungsvorrichtung auf Grundlage der Beurteilungsergebnisse.

14. Verfahren nach Anspruch 13, wobei
die Bearbeitung im Durchlauf der Werkstücke mit einer Fördergeschwindigkeit von weniger als 200 m/min, bevorzugt 5m/min bis 150 m/min und insbesondere bevorzugt 15 m/min bis 50 m/min erfolgt.

15. Verfahren nach Anspruch 13 oder 14, wobei
das optische Erfassen der vorderen und hinteren Endabschnitte (Q1, Q2) des zu bearbeitenden Werkstücks (W) in einer Projektion auf eine Ebene erfolgt, die im Wesentlichen parallel zur Bearbeitungsrichtung (R) und senkrecht zu zumindest einer Hauptfläche (H1, H2) des zu bearbeitenden Werkstücks (W) ist.

16. Verfahren nach einem der Ansprüche 13 bis 15, ferner mit den Schritten
Ermitteln der Materialstärke (D) der Beschichtung (B) an dem vorderen und/oder hinteren Endabschnitt (Q1, Q2) des zu bearbeitenden Werkstücks (W) durch Auswerten der Erfassungsergebnisse falls im Beurteilungsschritt das Vorhandensein einer Beschichtung (B) an dem entsprechenden Endabschnitt (Q1, Q2) des zu bearbeitenden Werkstücks (W) festgestellt wurde, und
Steuern der weiteren Bearbeitung des Werkstücks (W) durch die Bearbeitungsvorrichtung auf Grundlage der ermittelten Materialstärke (D), und
vorzugsweise ferner mit den Schritten
Vergleich der ermittelten Materialstärke (D) mit einem vorbestimmten Schwellwert, und,
falls die ermittelte Materialstärke den vorbestimmten Schwellwert überschreitet,
Bestimmen weiterer Parameter der entsprechenden Beschichtung (B) durch Auswerten der Erfassungsergebnisse, und
Steuern der weiteren Bearbeitung des Werkstücks (W) durch die Bearbeitungsvorrichtung (6) auf Grundlage der weiteren Parameter.

## Claims

1. Machine for machining (10), for machining workpieces (W), substantially in sheet or panel form, at least a portion or portions of which are preferably of wood, engineered wood, composite materials or plastics materials, the machine for machining having:
a machining arrangement for machining a workpiece in a direction of machining (R),
an optical sensing arrangement (2),
an analysing unit, and
a control means (4),
the optical sensing arrangement (2) being so designed and arranged that it is able to optically sense end-portions (Q1, Q2) of a workpiece (W) to be machined which are at the front and rear in the direction of machining (R) and supplies corresponding results of the sensing to the analysing unit, **characterised in that**
the analysing unit is so designed that, on the basis of the results of the sensing, it assesses whether or not a covering (B) is present on the front and/or rear end-portions (Ql, Q2) of the workpiece (W) to be machined, and supplies results to this effect of the assessment to the control means (4), and
the control means (4) is so designed that it controls the further machining, by the machining arrangement (6), of the workpiece (W) to be machined on the basis of the results of the assessment.

2. Machine for machining (10) according to claim 1, wherein the machining arrangement has a plurality of machining assemblies, and the control means (4) is, in addition, so designed that it controls the further machining by controlling at least one machining operation by at least one of the machining assemblies and prevents it particularly if no covering (B) is present on the front and/or rear end-portions (Ql, Q2) of the workpiece (W) to be machined.

3. Machine for machining (10) according to claim 1 or 2, wherein
the analysing unit is, in addition, so designed that, if a covering (B) is present on the front and/or rear end-portions (Ql, Q2) of the workpiece (W) to be machined, it determines the thickness (D) of the material forming the covering (B) concerned from the results of the sensing and supplies the thickness (D) which is determined for the material to the control means (4), and
the control means (4) is, in addition, so designed that it controls the further machining, by the machining arrangement (6), of the workpiece (W) to be machined on the basis of the thickness (D) which is determined for the material.

4. Machine for machining (10) according to one of the preceding claims, wherein
the analysing unit is, in addition, so designed that, if a covering (B) is present on the front and/or rear end-portions (Ql, Q2) of the workpiece (W) to be machined, it determines further parameters of the covering (B) concerned from the results of the sensing and supplies these to the control means (4), and
the control means (4) is, in addition, so designed that it controls the further machining, by the machining arrangement (6), of the workpiece (W) to be machined on the basis of the further parameters, the further parameters preferably comprising the radiuses forming transitions from the covering (B) to the workpiece (W) to be machined and/or the bevels forming transitions from the covering (B) to the workpiece (W) to be machined and/or the thickness of the workpiece (W) to be machined.

5. Machine for machining (10) according to claim 4, wherein
the analysing unit is, in addition, so designed that, if a covering (B) is present on the front and/or rear end-portions (Ql, Q2) of the workpiece (W) to be machined, it determines the thickness (D) of the material forming the covering (B) concerned, compares the thickness (D) determined for the material with a predetermined threshold value, and determines the further parameters of the covering concerned only if the threshold value is exceeded by the thickness (D) of the material forming the covering concerned.

6. Machine for machining (10) according to one of the preceding claims, wherein the machining arrangement has a plurality of machining assemblies and
the analysing unit is, in addition, so designed that, if a covering (B) is present on the front and/or rear end-portions (Ql, Q2) of the workpiece (W) to be machined, it determines the thickness (D) of the material forming the covering (B) concerned and compares the thickness (D) determined for the material with a predetermined threshold value, and
the control means (4) is, in addition, so designed that it controls the further machining by controlling at least one machining operation by at least one of the machining assemblies and prevents it particularly if the thickness (D) of the material forming the covering concerned on the front and/or rear end-portions (Q1,Q2) is below the threshold value.

7. Machine for machining (10) according to one of the preceding claims, wherein
the optical sensing arrangement (2) is so arranged that it senses the front and/or end-portions (Ql, Q2) of the workpiece (W) to be machined in a projection onto a plane, which plane is substantially parallel to the direction of machining (R) and perpendicular to at least one main face of the workpiece (W) to be machined.

8. Machine for machining (10) according to one of the preceding claims, having, in addition,
a conveying means (5) to convey the workpiece (W) to be machined in a direction of conveying (F), the direction of conveying (F) being parallel to the direction of machining (R); the conveying taking place as a through-feed of the workpieces (W); and
the speed of conveying being less than 200 m/min, and preferably 5 m/min to 150 m/min and as a particular preference 15 m/min to 50 m/min.

9. Machine for machining (10) according to one of the preceding claims, wherein
the optical sensing arrangement (2) has:
two or more sensing means (2a, 2b) which are arranged one behind the other in the direction of machining (R), and/or
one or more pairs of optical sensing means (2a, 2b) which, as pairs, are situated opposite one another across the workpiece (W) to be machined in a direction perpendicular to the direction of machining (R).

10. Machine for machining (10) according to one of the preceding claims, wherein the optical sensing arrangement (2) is an image-forming system.

11. Machine for machining (10) according to one of the preceding claims, having, in addition,
a sensor means (1, 3), which is so designed that it senses positional data relating to the workpiece (W) to be machined and supplies corresponding results of the sensing of position to the control means,
the machine for machining (10) being so designed that the optical sensing by the optical sensing arrangement of the front and rear end-portions (Ql, Q2) of the workpiece (W) to be machined has to be activated on the basis of the results of the sensing of position.

12. Machine for machining (10) according to one of the preceding claims, wherein
the analysing unit is incorporated in the optical sensing arrangement (2) or in the control means (4).

13. Method of machining workpieces (W), substantially in sheet or panel form, at least a portion or portions of which are preferably of wood, engineered wood, composite materials or plastics materials, using a machine for machining which has an optical sensing arrangement (2) and a machining arrangement (6) for machining a workpiece (W) in a direction of machining (R), the method having the following steps:
optical sensing of end-portions (Ql, Q2) of the workpiece (W) to be machined which are at the front and rear in the direction of machining (R), in order to generate corresponding results of sensing from the optical sensing arrangement (2);
**characterised by** assessment of whether or not a covering (B) is present on the front and rear end-portions (Q1, Q2) of the workpiece (W), in order to generate corresponding results of assessment, the assessment being performed by analysing the results of the sensing; and
control of the further machining of the workpieces (W), by the machining arrangement, on the basis of the results of the assessment.

14. Method according to claim 13, wherein
the machining takes place as the workpieces are fed through at a speed of conveying of less than 200 m/min, and preferably of 5 m/min to 150 m/min and as a particular preference of 15 m/min to 50 m/min.

15. Method according to claim 13 or 14, wherein
the optical sensing of the front and rear end-portions (Ql, Q2) of the workpiece (W) to be machined takes place in a projection onto a plane, which plane is substantially parallel to the direction of machining (R) and perpendicular to at least one main face (H1, H2) of the workpiece (W) to be machined.

16. Method according to one of claims 13 to 15 having, in addition,
the steps of determining the thickness (D) of the material forming the covering (B) on the front and/or rear end-portions (Ql, Q2) of the workpiece (W) to be machined by analysing the results of the sensing if, in the assessing step, a covering (B) was found to be present on the relevant end-portion (Ql, Q2) of the workpiece (W) to be machined, and
controlling of the further machining, by the machining arrangement, of the workpiece (W) on the basis of the thickness (D) determined for the material, and
preferably having, in addition,
the steps of comparing the thickness (D) determined for the material with a predetermined threshold value and,
if the thickness determined for the material exceeds the predetermined threshold value,
determining further parameters of the covering (B) concerned by analysing the results of the sensing, and
controlling the further machining, by the machining arrangement (6), of the workpiece (W) on the basis of the further parameters.

## Revendications

1. Machine-outil (10) destinée à usiner des pièces (W) sensiblement en forme de plaques, qui sont constituées de préférence au moins en partie de bois, de matériaux dérivés du bois, de matériaux composites ou de matières plastiques, dans laquelle la machine-outil présente :
un dispositif d'usinage destiné à usiner une pièce dans une direction d'usinage (R),
un dispositif optique de détection (2),
une unité d'évaluation, et
un dispositif de commande (4),
dans laquelle
le dispositif optique de détection (2) est conçu et agencé de sorte qu'il peut détecter optiquement des sections d'extrémité avant et arrière (Q1, Q2), par rapport à la direction d'usinage (R), d'une pièce (W) à usiner et fournit à l'unité d'évaluation les résultats correspondants de la détection, **caractérisée en ce que**
l'unité d'évaluation est conçue de sorte qu'elle évalue sur la base des résultats de la détection si un revêtement (B) est présent ou non sur la section d'extrémité avant et/ou arrière (Q1, Q2) de la pièce (W) à usiner, et fournit les résultats correspondants au dispositif de commande (4), et
le dispositif de commande (4) est conçu de sorte qu'il commande l'usinage ultérieur de la pièce (W) à usiner par le dispositif d'usinage (6) sur la base des résultats de l'évaluation.

2. Machine-outil (10) selon la revendication 1, dans laquelle
le dispositif d'usinage présente plusieurs groupes d'usinage, et
le dispositif de commande (4) est conçu en outre de sorte qu'il commande l'usinage ultérieur, qu'il commande au moins un usinage par au moins un des groupes d'usinage et en particulier l'empêche lorsqu'aucun revêtement (B) n'est présent sur la section d'extrémité avant et/ou arrière (Q1, Q2) de la pièce (W) à usiner.

3. Machine-outil (10) selon la revendication 1 ou 2, dans laquelle
l'unité d'évaluation est en outre conçue de sorte que, en présence d'un revêtement (B) sur la section d'extrémité avant et/ou arrière (Q1, Q2) de la pièce (W) à usiner, l'épaisseur de matériau (D) du revêtement (B) correspondant est déterminée à partir des résultats de la détection et l'épaisseur de matériau (D) déterminée est fournie au dispositif de commande (4), et
le dispositif de commande (4) est en outre conçu de sorte qu'il commande l'usinage ultérieur de la pièce (W) à usiner par le dispositif d'usinage (6) sur la base de l'épaisseur de matériau (D) déterminée.

4. Machine-outil (10) selon l'une quelconque des revendications précédentes, dans laquelle
l'unité d'évaluation est en outre conçue de sorte que, en présence d'un revêtement (B) sur la section d'extrémité avant et/ou arrière (Q1, Q2) de la pièce (W) à usiner, elle définit d'autres paramètres du revêtement (B) correspondant à partir des résultats de la détection et fournit ceux-ci au dispositif de commande (4), et
le dispositif de commande (4) est en outre conçu de sorte qu'il commande l'usinage ultérieur de la pièce (W) à usiner par le dispositif d'usinage (6) sur la base des autres paramètres, dans laquelle les autres paramètres comportent de préférence les rayons de transition du revêtement (B) à la pièce (W) à usiner et/ou les phases de transition du revêtement (B) à la pièce (W) à usiner et/ou l'épaisseur de la pièce (W) à usiner.

5. Machine-outil (10) selon la revendication 4, dans laquelle
l'unité d'évaluation est en outre conçue de sorte que, en présence d'un revêtement (B) sur la section d'extrémité avant et/ou arrière (Q1, Q2) de la pièce (W) à usiner, elle détermine l'épaisseur de matériau (D) du revêtement (B) correspondant, compare l'épaisseur de matériau (D) déterminée à une valeur seuil prédéfinie, et définit les autres paramètres du revêtement correspondant uniquement lorsque la valeur seuil est dépassée par l'épaisseur de matériau (D) du revêtement correspondant.

6. Machine-outil (10) selon l'une quelconque des revendications précédentes, dans laquelle
le dispositif d'usinage présente plusieurs groupes d'usinage,
l'unité d'évaluation est en outre conçue de sorte que, en présence d'un revêtement (B) sur la section d'extrémité avant et/ou arrière (Q1, Q2) de la pièce (W) à usiner, elle détermine l'épaisseur de matériau (D) du revêtement (B) correspondant et compare l'épaisseur de matériau (D) déterminée à une valeur seuil prédéfinie, et
le dispositif de commande (4) est en outre conçu de sorte qu'il commande l'usinage ultérieur du fait qu'il commande au moins un usinage par au moins un des groupes d'usinage et en particulier l'empêche lorsque la valeur seuil n'est pas atteinte par l'épaisseur de matériau (D) du revêtement correspondant sur la section d'extrémité avant et/ou arrière (Q1, Q2).

7. Machine-outil (10) selon l'une quelconque des revendications précédentes, dans laquelle
le dispositif optique de détection (2) est agencé de sorte qu'il détecte la section d'extrémité avant et/ou arrière (Q1, Q2) de la pièce (W) à usiner dans une projection sur un plan qui est sensiblement parallèle à la direction d'usinage (R) et perpendiculaire à au moins une surface principale de la pièce (W) à usiner.

8. Machine-outil (10) selon l'une quelconque des revendications précédentes, comprenant en outre
un dispositif de transport (5) destiné à transporter la pièce (W) à usiner dans une direction de transport (F), dans laquelle la direction de transport (F) est parallèle à la direction d'usinage (R) ;
le transport en continu des pièces (W) s'effectue ; et
la vitesse de transport est inférieure à 200 m/min, atteint de préférence de 5 m/min à 150 m/min et de manière particulièrement préférée de 15 m/min à 50 m/min.

9. Machine-outil (10) selon l'une quelconque des revendications précédentes, dans laquelle
le dispositif optique de détection (2) présente :
deux dispositifs de détection (2a, 2b) ou plus, qui sont agencés l'un derrière l'autre dans la direction d'usinage (R), et/ou.
une ou plusieurs paires de dispositifs optiques de détection (2a, 2a), qui sont à l'opposé l'un de l'autre par paire au-delà de la pièce (W) à usiner dans une direction perpendiculaire à la direction d'usinage (R).

10. Machine-outil (10) selon l'une quelconque des revendications précédentes, dans laquelle le dispositif optique de détection (2) est un système d'imagerie.

11. Machine-outil (10) selon l'une quelconque des revendications précédentes, comprenant en outre
d'un dispositif de détection (1, 3), qui est conçu de sorte qu'il détecte les données de position de la pièce (W) à usiner et fournit les résultats correspondants de la détection de position au dispositif de commande, dans laquelle
la machine-outil (10) est conçue de sorte que la détection optique des sections d'extrémité avant et arrière (Q1, Q2) de la pièce (W) à usiner doit être activée par le dispositif optique de détection sur la base des résultats de la détection de position.

12. Machine-outil (10) selon l'une quelconque des revendications précédentes, dans laquelle
l'unité d'évaluation est intégrée dans le dispositif optique de détection (2) ou le dispositif de commande (4).

13. Procédé d'usinage de pièces (W) sensiblement en forme de plaques, qui sont constituées de préférence au moins en partie de bois, de matériaux dérivés du bois, de matériaux composites ou de matières plastiques, au moyen d'une machine-outil, qui présente un dispositif optique de détection (2) et un dispositif d'usinage (6) destiné à usiner une pièce (W) dans une direction d'usinage (R), dans lequel le procédé présente les étapes suivantes :
la détection optique de sections d'extrémité avant et arrière (Q1, Q2), dans la direction d'usinage (R), de la pièce (W) à usiner pour générer des résultats correspondants de la détection au moyen du dispositif optique de détection (2) ;
**caractérisé par**
le fait d'évaluer si un revêtement (B) est présent ou non sur les sections d'extrémité avant et arrière (Q1, Q2) de la pièce (W), pour la génération de résultats correspondants de l'évaluation, dans lequel l'évaluation s'effectue par analyse des résultats de la détection ;
et
la commande de l'usinage ultérieur de la pièce (W) par le dispositif d'usinage sur la base des résultats de l'évaluation.

14. Procédé selon la revendication 13, dans lequel
l'usinage en continu des pièces s'effectue à une vitesse de transport inférieure à 200 m/min, de préférence de 5 m/min à 150 m/min et de manière particulièrement préférée de 15 m/min à 50 m/min.

15. Procédé selon la revendication 13 ou 14, dans lequel
la détection optique des sections d'extrémité avant et arrière (Q1, Q2) de la pièce (W) à usiner s'effectue dans une projection sur un plan qui est sensiblement parallèle à la direction d'usinage (R) et perpendiculaire à au moins une surface principale (H1, H2) de la pièce (W) à usiner.

16. Procédé selon l'une quelconque des revendications 13 à 15, comprenant en outre les étapes de
détermination de l'épaisseur de matériau (D) du revêtement (B) sur la section d'extrémité avant et/ou arrière (Q1, Q2) de la pièce (W) à usiner par évaluation des résultats de la détection au cas où, au cours de l'étape d'évaluation, la présence d'un revêtement (B) sur la section d'extrémité (Q1, Q2) correspondante de la pièce (W) à usiner aurait été constatée, et
commande de l'usinage ultérieur de la pièce (W) par le dispositif d'usinage sur la base de l'épaisseur de matériau (D) déterminée, et
comprenant de préférence en outre les étapes de
comparaison de l'épaisseur de matériau (D) déterminée par rapport à une valeur seuil prédéfinie, et,
au cas où l'épaisseur de matériau déterminée dépasserait la valeur seuil prédéfinie,
définition d'autres paramètres du revêtement (B) correspondant par analyse des résultats de la détection, et
commande de l'usinage ultérieur de la pièce (W) par le dispositif d'usinage (6) sur la base des autres paramètres.
